# Europäisches Patentamt
## European Patent Office
## Office européen des brevets

(11) Veröffentlichungsnummer: **0 173 264**
**B1**

(12) **EUROPÄISCHE PATENTSCHRIFT**

(45) Veröffentlichungstag der Patentschrift: **09.01.91**

(21) Anmeldenummer: **85110614.6**

(22) Anmeldetag: **23.08.85**

(51) Int. Cl.⁵: **H 04 M 3/42**

(54) Verfahren für eine programmgesteuerte Fernsprechvermittlungsanlage, insbesondere Wählnebenstellenanlage, bei der von einer jeweils berechtigten Teilnehmerstelle aus, verschiedene Leistungsmerkmale aktivierbar sind.

(30) Priorität: **28.08.84 DE 3431614**

(43) Veröffentlichungstag der Anmeldung:
**05.03.86 Patentblatt 86/10**

(45) Bekanntmachung des Hinweises auf die Patenterteilung:
**09.01.91 Patentblatt 91/02**

(84) Benannte Vertragsstaaten:
**DE FR GB**

(56) Entgegenhaltungen:
**FR-A-2 531 590**
**GB-A-1 397 841**
**COLLOQUE INTERNATIONAL DE COMMUTATION, INTERNATIONAL SWITCHING SYMPOSIUM, Paris, 7.-11. Mai 1979, Seiten 498-503; P.B. FRAME et al.: "Nouveaux services pour les usagers avec système d'assistance vocale"**

(73) Patentinhaber: **Siemens Aktiengesellschaft**
**Wittelsbacherplatz 2**
**D-8000 München 2 (DE)**

(72) Erfinder: **Verlohr, Axel, Dipl.-Ing.**
**August-Macke-Weg 8**
**D-8000 München 71 (DE)**

(56) References cited:
**1982 INTERNATIONAL ZURICH SEMINAR ON DIGITAL COMMUNICATIONS, MAN-MACHINE INTERACTION, Zürich, 9.-11. März 1982, Seiten 69-75; D.J. EIGEN et al.: "Human-machine telephone service dialing protocols: analysis and characterization"**

**TELECOMMUNICATIONS AND RADIO ENGINEERING, Band 26/27, Nr. 6, Juni 1972, Seiten 20-24; N.D. NAUMOVA et al.: "Auxiliary types of service in prospective AO systems"**

**PATENT ABSTRACTS OF JAPAN, Band 6, Nr. 6 (E-89)884r, 14. Januar 1982; & JP-A-56 126 358 (NIPPON DENSHIN DENWA KOSHA) 03-10-1981**

**Beschreibung**

Die Erfindung betrifft ein Verfahren für eine programmgesteuerte Fernsprechvermittlungsanlage, insbesondere Wählnebenstellenanlage, mit einer sämtliche Vermittlungsvorgänge abwickelnden Steuerrechnereinheit, die Zugriff zu entsprechenden Speicheranordnungen hat, in denen die hierfür notwendigen Informationen abgelegt sind, wobei von einer jeweils berechtigten Teilnehmerstelle aus verschiedene Leistungsmerkmale im Zusammenhang mit bereits bestehenden oder aufzubauenden Sprechverbindungen aktivierbar sind.

In heutigen Fernsprechvermittlungssystemen kann ein Fernsprechteilnehmer von der jeweiligen Fernsprechstation aus bestimmte Leistungsmerkmale, deren Anzahl durch die Verwendung von Halbleiterspeichern und Steuerrechnereinheiten erweitert werden konnte, in Anspruch nehmen. Derartige Leitungsmerkmale betreffen beispielsweise den Anrufschutz, den selbsttätigen Rückruf, die Rufumleitung, das Aufschalten oder eine Konferenzverbindung. Solche Dienste können entweder bei Belegung der Vermittlungseinrichtungen oder auch während einer bestehenden Gesprächverbindung angefordert werden. Es ist bekannt Dienstaufträge durch die Einwahl bestimmter und sich voneinander unterscheidender Ziffern bzw. Kennziffernfolgen anzufordern. Dies ist umständlich und es besteht insbesondere bei durch Prüfkennziffern zu ergänzenden langen Ziffernfolgen die Gefahr von fehler-Rs 1 Ky/ 22.08.84 haften Eingaben. Eine andere Möglichkeit, einzelne Dienste zu aktivieren, besteht darin, bestimmte Prozedurtasten zu betätigen. Um solche Prozedurtasten vorzusehen, sind teuere Sonderfernsprechstationen erforderlich. Sollen zusätzliche Dienste ermöglicht werden, so müßte die Anzahl der Prozedurtasten entsprechend erhöht werden. Dies würde nicht nur zu einem höheren Preis führen, sondern es würde dadurch auch die leichte Überschaubarkeit des vorhandenen Tastenfeldes verloren gehen.

Der Artikel in Colloque International de Commutation, International Switching Symposium, Paris, 7—11. Mai 1979, Seiten 498—503; P. B. Frame et al.: "Nouveaux services pour les usagers avec système d'assistance vocale" beschreibt einen Sprachspeicher zur Abgabe von Anweisungen an bestimmte, ein Leißtungsmerkmal der Vermittelungsanlage anfordernde Personen. Wird ein ein Leistungsmerkmal bezeichnender Code eingegeben, so wird aus dem Sprachspeicher ein Text ausgelesen und übertragen, der besagt welches Leßtungsmerkmal ausgewählt wurde und welche zusätzlichen Eingaben erforderlich sind, um die gewünschte Funktion des aktivierten Leistungsmerkmals festzulegen.

Der Artikel in 1982 International Zurich Seminar on Digital Communications, Man-Machine Interaction, Zürich, 9—11. März 1982, Seiten 69—75; D. J. Eigen et al.: "Human-machine telephone service dialing protocols: analysis and characterization" beschreibt, daß eine Liste von Informationen sprachlich ausgegeben werden kann, und daß das Benützer aus den angeboknen Alternativen dadurch auswählen kann, das er die Ausgabe an der gewünschten Stelle unterbricht.

Es ist die Aufgabe der Erfindung, die Inanspruchnahme von Diensten, insbesondere im Hinblick auf zukünftige Erweiterungen, zu vereinfachen. Dies wird dadurch erreicht, daß in einer Speicheranordnung diejenigen Informationen, die die zu aktivierenden Leistungsmerkmale jeweils charakterisieren, abgespeichert sind, daß in Abhängigkeit vom Vorliegen eines bestimmten Vermittlungszustandes die Informationen über das erste der im vorliegenden Vermittlungszustand aktivier baren Leistungsmerkmale aufgrund einer, an der Fernsprechstation erfolgenden einfachen Signalgabe zu dieser übertragen wird und dort in Form einer unmittelbaren wörtlichen Bezeichnung des Leistungsmerkmals sinnlich wahrnehmbar angezeigt wird, daß jeweils, sofern danach innerhalb einer vorgegebenen Zeitspanne die gleiche Signalgabe erneut erfolgt, die dem angezeigten Leistungsmerkmal entsprechenden Folgefunktionen durch die Steuerrechnereinheit veranlaßt werden, daß sofern in dieser Zeitspanne eine weitere gleichartige Signalgabe unterbleibt, jeweils selbsttätig die Informationen über ein nächstes mögliches Leistungsmerkmal an der Fernsprechstation angezeigt werden.

Es werden nach der Erfindung durch die Signalgabe, die z.B. durch die Betätigung ein und derselben Signaltaste oder durch eine kurzzeitige Betätigung des Gabelumschalters vorgenommen werden kann, dem Teilnehmer die in der betreffenden Vermittlungssituation durch ihn aktivierbaren Dienste angkündigt. Da dies in gleicher Weise, wie das Aktivieren eines der angezeigten Dienste, durch eine einzige Signaltaste oder je nach Vermittlungssystem auch ohne Signaltaste nur durch kurzzeitiges Betätigen des Gabelumschalters erfolgen kann, können also gewöhnliche Fernsprechapparate hierfür verwendet werden. Durch das erfindungsgemäße Verfahren wird neben einer Bedienungserleichterung eine hohe Zuverlässigkeit bei der Aktivierung eines Dienstes erreicht. Die Anzeige erfolgt dabei vorteilhaft in Form der unmittelbaren Aussage über den jeweiligen Dienst bzw. über das Leistungsmerkmal.

Eine besonders vorteilhafte Weitergestaltung des erfindungsgemäßen Verfahrens besteht darin, daß die Speichereinrichtung Bestandteil einer Sprachausgabeeinheit ist und darin die möglichen Leistungsmerkmale als diese charakterisierende Begriffe abgespeichert sind. Die für den betreffenden Vermittlungszustand jeweils zutreffenden Leistungsmerkmale werden dann als Sprachinformation zu der jeweiligen Teilnehmerstelle übertragen und dort unmittelbar angesagt. Es sind also gewöhnliche Fernsprechapparate ohne jegliche Zusätze zu verwenden. Die zentrale Steuerrechnereinheit ermöglicht jeweils diejenige Sprachdurchsage, die den vom Teilnehmer aktivierbaren Dienst ankündigt. Bei der akustischen Anzeige ist die Übermittlung der ein Leistungsmerkmal kennzeichnenden Information in äußerst einfacher Weise auf einer normalen Anschlußleitung störungsfrei möglich.

Es kann vorgesehen sein, daß das Ende der bei einer Anzeige jeweils vorgegebenen Zeitspanne durch ein Aufmerksamkeitszeichen erkennbar gemacht wird. Dieses Aufmerksamkeitszeichen kann die Anzeige des als nächstes abrufbaren Leistungsmerkmales selbst darstellen.

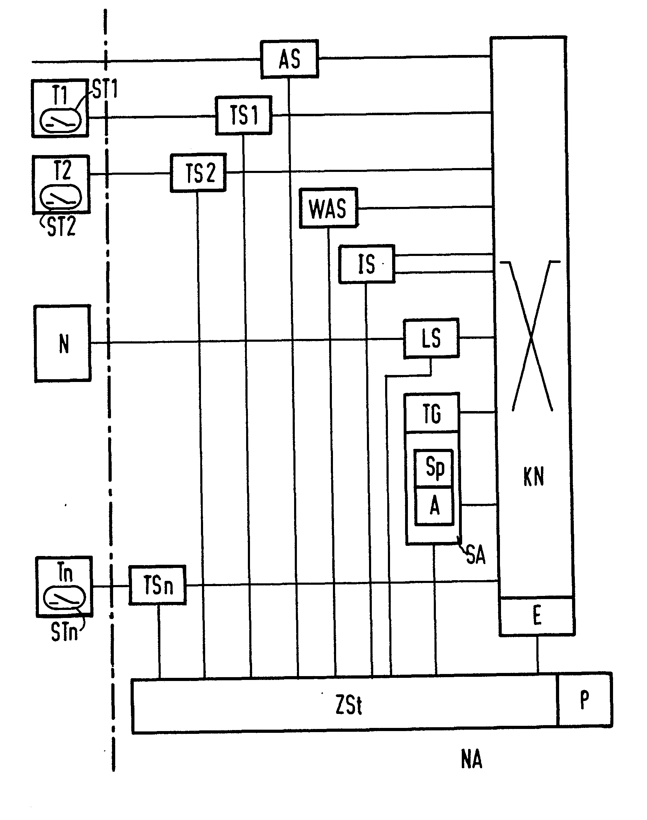

Zum besseren Verständnis des erfindungsgemäßen Verfahrens wird im folgenden ein Ausführungsbeispiel der Erfindung anhand der Zeichnung beschrieben. Grundsätzlich kann das Verfahren sowohl bei einem öffentlichen als auch bei einem privatem Fernsprechvermittlungssystem angewendet werden. Diese ist bei analogen Systemen und auch bei digitalen Vermittlungssystemen möglich. Das Ausführungsbeispiel zeigt einige Funktionseinheiten einer analogen speicherprogrammierten Nebenstellenanlage NA, deren Steuerungsabläufe im wesentlichen durch die zentrale Steuerrechnereinheit ZSt gesteuert werden. Im Blockschaltbild sind die für den Standardverkehr vorgesehenen Verbindungssätze, nämlich ein Amtssatz AS, ein Internsatz IS, ein für die Aufnahme der im Mehrfrequenz-Verfahren abgegebenen Wahlinformation vorhandener Aufnahmesatz WAS und ein bei einer Verbindung zu einer weiteren Nebenstellenanlage N heranzuziehender Leitungssatz LS gezeigt. Diese Verbindungssätze und gegebenenfalls eine nicht dargestellte teilzentrale Steuereinheit können in Verbindung mit dem entsprechenden Anteil des Koppelnetzes KN und dem jeweiligen Koppelnetzeinsteller E für eine bestimmte Gruppe von Teilnehmerstellen T1 bis Tn vorhanden sein. Werden mehrere dieser Teilnehmergruppen gebildet, so sind diese den genannten Einheiten in entsprechender Weise zugeordnet. In jeder Teilnehmergruppe ist für eine Teilnehmerstelle T ein Teilnehmersat TS, im Ausführungsbeispiel die Teilnehmersätze TS1 bis TSn, vorgesehen. Dieser enthält jeweils in nicht dargestellter Weise u.a. eine Indikationsstelle, die Zustandsänderungen auf der jeweiligen Anschlußleitung erkennt. Die einzelnen Informationen werden von der zentralen Steuerrechnereinheit ZSt aufgenommen. Von dieser werden dann Einstellbefehle für die im Teilnehmersatz enthaltenen Funktionsschalter übermittelt. Dies trifft in gleicher Weise für die übrigen Verbindungssätze zu. Der jeweilige Verbindungssatz wird dabei über eine Adressinformation markiert. Aufgrund einer Einstellinformation wird die Betätigungsart eines Funktionsschalters festgelegt und gleichzeitig der betreffende Funktionsschalter ausgewählt. Die jeweilige Einstellung desselben wird dann durch die Taktinformation des vorhandenen Systemtaktes durchgeführt.

Die genannten Teilnehmer- bzw. verbindungsindividuellen Sätze sind im Ausführungsbeispiel gleichberechtigt in der sogenannten Umkehrgruppierung an Koppelfeldanschlüsse nur einer einzigen Koppelfeldseite angeschlossen. Der Einsteller E hat die Aufgabe alle Koppelpunkte, die für eine Verbindung durch das Koppelnetz benötigt werden, zu betätigen. Durch die Verbindungssätze werden die für den Aufbau, das Halten und das Auslösen einer Verbindung unmittelbar am Koppelnetz erforderlichen vermittlungstechnischen Schaltvorgäng ausgeführt. Die für die einzelnen Steuerabläufe notwendigen Programme sollen in dem Programmspeicher P, zu dem die Steuerrechnereinheit Zugriff hat, enthalten sein.

Die ersten von einem Teilnehmer eingewählte Ziffer wird von der Steuerrechnereinheit ZST ausgewertet und dabei festgestellt, ob eine interne Verbindung oder eine externe Verbindung gewünscht wird. Im letzteren Fall würde dann der weitere Aufbau unter Zuhilfenahme eines Amtssatzes AS erfolgen. Ist eine interne Verbindung beabsichtigt, so wird ein Weg zum gewünschten Teilnehmer gesucht. Es wird der Einsteller E veranlaßt, die Einstellung der zugehörigen Koppelkontakte im Koppelnetz KN vorzunehmen. Ist der Koppelweg in Ordnung, so erfolgt die Durchschaltung und es wird zum rufenden Freiteilnehmer Freiten und zum gerufenen Teilnehmer das Rufsignal vom Internsatz IS ausgesendet. Ist die rufende Teilnehmerstelle mit einer Tastwahleinrichtung ausgerüstet, so wird der zur Aufnahme der damit eingegebenen Wahlinformation vorhandene Satz WAS ausgelöst. Mit dem Melden der gerufenen Teilnehmerstelle erfolgt dann der Eintritt in den Gesprächszustand. Wird durch einen der beteiligten Teilnehmer eingehängt, so bewirkt dies durch entsprechende Befehle das Auslösen des Teilnehmersatzes TS und des eingestellten Weges.

Der Teilnehmer eines modernen Fernsprechvermittlungssystems kann bestimmte Leistungsmerkmale abrufen. Diese Dienstaufträge könnten jeweils durch Wahl bestimmter Kennziffer bzw. Kennziffernfolgen vorgenommen werden. Es ist jedoch insbesondere durch mögliche Ziffernvertauschungen eine hohe Fehlerwahrscheinlichkeit gegeben. Bei einer Fernsprechstation mit Tastwahleinrichtung könnte auch für jedes der möglichen Leistungsmerkmale eine zusätzliche Prozedurtaste vorgesehen werden. Aus Gründen der Überschaubarkeit und der Preisgestaltung kann jedoch nur eine begrenzte Anzahl von Auftragsmöglichkeiten gleichzeitig eingerichtet werden. Außerdem ist es schwierig, Änderungen zu ermöglichen.

Es ist nun vorgesehen, daß für die Inanspruchnahme von Diensten, bzw. von Leistungsmerkmalen eine sogenannte Bedienerführung aufgrund einer entsprechenden Sprachdurchsage erfolgt. Zu diesem Zweck enthält die Vermittlungslange NA eine Sprachausgabeeinheit SA. Im ihrem Sprachspeicher Sp sind die im Vermittlungssystem möglichen Leistungsmerkmale jeweils als Wortbegriff abgespeichert. Sie können jeweils in Abhängigkeit von den durch die Steuerrechnereinheit ZSt gelieferten Informationen über die Auswahleinheit A ausgespeichert und als analoge Sprachinformation zu der betreffenden Teilnehmerstelle übertragen werden. Diese Übertragung des ein Leistungsmerkmal kennzeichnenden Wortes und die Aktivierung dieses Leistungsmerkmales wird durch die Betätigung ein und derselben, an der Fernsprechstation vorhandenen Signaltaste ST ausgelöst. Es kann also grundsätzlich ein gewöhnlicher Fernsprechapparat mit nur einer Signaltaste verwendet werden. Der Teilnehmer bekundet seinen Wunsch einen Dienst zu aktivieren durch Betätigung dieser Signaltaste ST. Das Vermittlungssystem verbindet dann den Teilnehmer mit denjenigen Sprachdurchsagen, die diejenigen Dienste ankündigen, die in dem betreffenden Vermittlungszustand sinnvoll sind. Betätigt der Teilnehmer dann die Signaltaste während einer solchen Durchsage oder in einer vorgegebenen nachfolgenden kurzen Zeitspanne, so wird der zugeordnete Dienst aktiviert. Bei einer Fernsprechstation mit Display und einer Signaltaste wäre es möglich, anstelle einer Durchsage den jeweiligen Dienst durch Darstellung des betreffenden Wortes am Display optisch anzuzeigen. Es ist auch denkbar einer Fernsprechstation eine Einheit zuzuordnen, durch die eine den Dienst festlegende Information nach der Übermittlung zu der Teilnehmerstelle so umgeformt wird, daß der den betreffenden Dienst kennzeichnende Begriff über den Tastsinn erfaßbar ist.

Als Beispiel sei angenommen, daß von der Teilnehmerstelle T1 aus ein Gespräch mit dem Teilnehmer der Teilnehmerstelle Tn geführt wird, Wählt nun beispielsweise der Teilnehmer der Teilnehmerstelle T2 die Teilnehmerstelle T1 an, so wird ihm von Vermittlungssystem der Besetzton übermittelt. In einem solchen vermittlungstechnischen Zustand sollen nun verschiedene Leistungsmerkmale abgerufen werden können. Betätigt der Teilnehmer, da er den Teilnehmer der Teilnehmerstelle T1 dringend zu sprechen wünscht die Signaltaste, so wird dies über die Teilnehmerschaltung TS2 von der Steuerrechnereinheit ZSt erkannt. Es wird ihm nun das erste der möglichen Leistungsmerkmale angesagt. Aus dem Sprachspeicher Sp wird ihm gesteuert durch die Steuerrechnereinheit als analoge Sprachinformation das Wort "Ruckruf" angesagt. Er könnte nun an seiner Teilnehmerstelle die Signaltaste ST2 betätigen und auf diese Weise im Vermittlungssystem einen automatischen Rückruf bei Freiwerden der Teilnehmerstelle T1 programmieren. Da er den Teilnehmer der Teilnehmerstelle T1 sofort sprechen möchte, unterläß er die Betätigung der Signaltaste. Nach Ablauf einer kurzen Zeitspanne, deren Ablauf ihn z.B. durch einen angelegten Hörton angekündigt wird, erfolgte die Ansage des in dieser Vermittlungssituation weiterhin möglichen Leistungsmerkmales. Es wird ihm also durch Ausspeicherung aus dem Sprachspeicher Sp der Begriff "Aufschalten" angesagt. Betätigt nun in der nachfolgend vorgegebenen kurzen Zeitspanne der Teilnehmer an der Teilnehmerstelle T2 die Signaltaste ST2, so wird dies über die Teilnehmerschaltung TS2 von der Steuerrechnereinheit ZSt erkannt. Dies führt dann zur Aktivierung des Leistungsmerkmals "Aufschalten". Der Teilnehmer der Teilnehmerstelle T2 kann somit in die zwischen den teilnehmern der Teilmnehmerstelle T1 und Tn bestehende. Gesprächsverbindung eintreten. Die genannten Teilnehmerstellen werden in einer Dreierkonferenz zusammengeschaltet. Der Teilnehmer der Teilnehmerstelle T2 hat nun die Möglichkeit den beiden anderen Teilnehmern die Dringlichkeit seines Gesprächswunsches mitzuteilen und sie zum Beenden ihres Gespräches aufzufordern.

Als ein weiteres Beispiel sei der Fall erwähnt, daß sich der Teilnehmer der Teilnehmerstelle T1 in Rückfrage mit dem Teilnehmer der Teilnehmerstelle T2 befinden soll. Die ursprünglichem Gespräch beteiligte Teilnehmerstelle Tn wird gehalten. In diesem vermittlungtechnischen Zustand wird nun an der Teilnehmerstelle T1 die dort vorhandene Signaltaste ST2 betätigt. Zu dieser Teilnehmerstelle erfolgt nun die Sprachdurchsage eines Leistungsmerkmals, das in diesem Zustand aktivierbar wäre. Es wird also beispielsweise das in dem Sprachspeicher SP enthaltene Wort "Konferenz" durchgesagt. Es folgt nun eine kurze Zeitspanne in der dieses Leistungsmerkmal aktiviert werden könnte. Das Ende der Zeitspanne kann durch einen Ton angekündigt werden, der beispielsweise durch den Tongenerator TG geliefert wird. Dies kann ein in der Anlage bereits vorhandener Hörtongeber sein. Wird in der festgelegten Zeitspanne durch den Teilnehmer der Teilnehmerstelle T1 die Signaltaste nicht erneut betätigt, so wird ein nächstmöglichstes Leistungsmerkmal, nämlich das Leistungsmerkmal "Makeln" durchgesagt. Betätigt nun der Teilnehmer der Teilnehmerstelle T1 die Signaltaste, so wird er mit dem Teilnehmer der Teilnehmerstelle Tn verbunden. Durch nachfolgende Betätigung der Signaltaste kann der Teilnehmer der Teilnehmerstelle T1 zwischen den Teilnehmern der Teilnehmerstellen T2 und Tn makeln. Er kann also beliebig oft zwischen den verschiedenen gleichzeitig bestehenden Verbindungen wechseln.

**Patentansprüche**

1. Verfahren für eine programmgesteuerte Fernsprechvermittlungsanlage, insbesondere Wählnebenstellenanlge, mit einer sämtliche Vermittlungsvorgänge abwickelnden Steuerrechnereinheit, die Zugriff zu entsprechenden Speicheranordnungen hat, in denen die hierfür notwendigen Informationen abgelegt sind, wobei von einer jeweils berechtigten Teilnehmerstelle aus verschiedene Leistungsmerkmale im Zusammenhang mit bereits bestehenden oder aufzubauenden Sprechverbindungen aktivierbar sind, dadurch gekennzeichnet, daß in einer Speicheranordnung (Sp) diejenigen Informationen, die zu aktivierenden Leistungsmerkmale jeweils charakterisieren, abgespeichert sind, daß in Abhängigkeit vom Vorliegen eines bestimmten Vermittlungszustandes die Informationen über das erste der im Vorliegenden Vermittlungszustand aktivierbaren Leistungsmerkmale aufgrund einer an der Fernsprechstation (T1) erfolgenden einfachen Signalgabe (ST1) zu dieser übertragen wird und dort in Form einer unmittelbaren wörtlichen Bezeichnung des Leistungsmerkmals sinnlich wahrnehmbar angezeigt wird, daß jeweils, sofern danach innerhalb einer vorgegebenen Zeitspanne die gleiche Signalgabe (ST1) erneut erfolgt, die dem angezeigten Leistungsmerkmal entsprechenden Folgefunktionen durch die Steuerrechnereinheit (ZSt) veranlaßt werden, daß, sofern in dieser Zeitspanne eine weitere gleichartige Signalgabe unterbleibt, jeweils selbsttätig die Informationen über ein nächstes mögliches Leistungsmerkmal an der Fernsprechstation (T1) angezeigt werden.

2. Verfahren nach Anspruch 1, dadurch gekennzeichnet, daß die Speichereinrichtung (Sp) Bestandteil einer Sprachausgabeeinheit (SA) ist, daß die für den betreffenden Vermittlungszustand jeweils aktivierbaren Leistungsmerkmale als Sprachinformation zu der Fernsprechstation (T1) übertragen und dort unmittelbar angesagt werden.

3. Verfahren nach Anspruch 1, dadurch gekennzeichnet, daß das Ende der bei einer Anzeige jeweils vorgegebenen Zeitspanne durch ein zu der betreffenden Fernsprechstation übertragenes Aufmerksamkeitszeichen (TG) erkennbar wird.

4. Verfahren nach Anspruch 3, dadurch gekennzeichnet, daß das Aufmerksamkeitszeichen die Anzeige des als nächstes abrufbaren Leistungsmerkmals selbst darstellt.

5. Verfahren nach Anspruch 1, dadurch gekennzeichnet, daß die Signalgabe durch die an der Fernsprechstation (T1) vorhandenen einzigen Signaltaste erfolgt.

6. Verfahren nach Anspruch 1, dadurch gekennzeichnet, daß die Signalgabe durch kurzzeitiges Betätigen des Gabelumschalters erfolgt.

**Revendications**

1. Procédé pour un central téléphonique à commande par programme, en particulier central privé automatique, avec une unité de calcul de commande qui exécute toutes les opérations de commutation et qui accède aux dispositifs de mémoire correspondants dans lesquels sont contenues les informations qui sont nécessaires à cet effet, du type dans lequel sont susceptibles d'être activées, à partir d'un poste d'abonné, des indications caractéristiques de la nature des services en rapport avec des liaisons téléphoniques déjà existantes ou à établir, caractérisé par le fait que dans un dispositif à mémoire (Sp) sont mémorisées les informations qui caractérisent les indications caractéristiques de la nature des services à activer, qu'en fonction de la présence d'un état de commutation déterminé, les informations relatives à la première des indications caractéristiques des services susceptibles d'être activées dans l'état présent de la commutation sont transmises au poste téléphonique (T1) en réponse à la simple émission d'un signal ayant lieu au niveau de ce poste et y sont affichées de façon intelligible sous la forme d'une désignation littérale de l'indication caractéristique de service que dans la mesure où se répète ensuite, dans un intervalle de temps prédéterminé, la même émission de signal (ST1) qui provoque l'exécution par l'unité de calcul de commande (ZSt) la suite des opérations qui correspondent aux indications caractéristiques des servces qui ont été affichés, et que dans la mesure ou durant cet intervalle de temps une autre émission similaire de signaux n'intervient pas, des informations relatives à une caractéristique de service suivante qui seraient possibles, sont automatiquement affichées au poste téléphonique (T1).

2. Procédé selon la revendication 1, caractérisé par le fait que le dispositif à mémoire (Sp) est un élément constitutif d'une unité d'annonce verbale (SA), que les indications caractéristiques de service, qui sont susceptibles d'être activées pour l'état de commutation concerné, sont transmises, en tant qu'information verbale, au poste téléphonique (T1) et y sont énoncées directement.

3. Procédé selon la revendication 1, caractérisé par le fait que la fin de l'intervalle de temps prédéterminé pour un affichage peut être reconnue par un signal susceptible d'attirer l'attention (TG), qui est transmis au poste téléphonique concerné.

4. Procédé selon la revendication 3, caractérisé par le fait que le signal susceptible d'attirer l'attention représente l'affichage de l'indication caractéristique de service suivante qui est susceptible d'être appelée.

5. Procédé selon la revendication 1, caractérisé par le fait que l'émission de signaux a lieu à l'aide de la touche de signaux prévue seule au poste téléphonique (T1).

6. Procédé selon la revendication 1, caractérisé par le fait que l'émission de signaux a lieu par une manoeuvre de courte durée de la fourche interruptrice.

**Claims**

1. Method for a program-controlled telephone exchange system, particularly private automatic branch exchange, having a control computer unit which handles all switching operations and has access to corresponding memory arrangements in which the information necessary for this is stored, it being possible to activate various features, in conjunction with already existing voice connections or ones to be set up, from a respectively authorized subscriber station, characterized in that the information characterizing the features to be activated is stored in each case in a memory arrangement (Sp), in that depending on the presence of a given switching state, the information regarding the first activatable feature in the switching state present is transmitted thereto on the basis of a simple signal output (ST1) occurring at the telephone station (T1), and is indicated there in a sensorially perceptible fashion in the form of a directly worded designation of the feature, in that, insofar as the same signal output (ST1) occurs again thereafter within a prescribed time interval, in each case the successor functions corresponding to the feature indicated are initiated by the control computer unit (ZSt), and in that, insofar as no further identical signal output occurs in this time interval, the informations regarding a next possible feature are indicated in each case automatically at the telephone station (T1).

2. Method according to Claim 1, characterized in that the memory device (Sp) is the component of a voice output unit (SA), and in that the features which can be activated in each case for the respective switching state are transmitted to the telephone station (T1) as voice information and are immediately announced there.

3. Method according to Claim 1, characterized in that the end of the respectively prescribed time interval for an indication is made recognisable by an attention signal (TG) transmitted to the respective telephone station.

4. Method according to Claim 3, characterized in that the attention signal itself represents the indication of the features to be called next.

5. Method according to Claim 1, characterized in that the signal output is effected by means of the single signal key provided at the telephone station (T1).

6. Method according to Claim 1, characterized in that the signal output is effected by briefly actuating the cradle switch.

1